# EUROPEAN PATENT APPLICATION

(11) **EP 4 549 704 A1**
(43) Date of publication of application: **07.05.2025**
(21) Application number: 24203430.4
(22) Date of filing: 30.09.2024
(51) Int. Cl.: F01D 17/14

(54) **ROTOR ASSEMBLY FOR AN AIR PRESSURIZATION SYSTEM OF AN AIRCRAFT**

(30) Priority: 31.10.2023 GB 202316612
(71) Applicant: Rolls-Royce plc, London N1 9FX (GB)
(72) Inventor: Murray, Christopher, Derby, DE24 8BJ (GB)
(74) Representative: Rolls-Royce plc

(57) **Abstract**

A rotary assembly (600, 700) of a pressurized air system for an aircraft (800) comprises: a rotor (410) configured to be mechanically coupled to a spool (440) of a gas turbine engine (10), a flow modifier (605, 705) comprising a first section, defining a plurality of first flow channels (612, 712) configured to receive flow from the rotor, and a second section, defining a plurality of second flow channels (622, 722) configured to direct flow towards the rotor; wherein the rotary assembly (600, 700) is configured to permit relative movement between the rotor (410) and the flow modifier (605, 705) to move between: a turbine configuration in which the rotor (410) is configured to receive air from an external air source (470) via the second flow channels (622, 722) to drive the spool (440) to rotate; and a compressor configuration in which the rotor (410) is configured to be driven to rotate by the spool (440) and to receive and compress air from the gas turbine engine (10), and discharge the compressed air for supply via the first flow channels (612, 712) to an airframe system (450), wherein the second flow channels (622, 722) are angled and/or shaped such that a flow through at least part of the second flow channels (622, 722) is in a direction with a component in an axial direction (402) of the rotor.

## Description

### TECHNICAL FIELD

The present disclosure relates to a rotary assembly of a pressurized air system for an aircraft. The present disclosure also concerns a gas turbine engine assembly and an aircraft comprising the rotary assembly.

### BACKGROUND

It is known to pressurise a cabin of an aircraft using an air pressurisation system which makes use of engine bleed air which is bled from a compressor section of the core of a gas turbine engine. Bleeding high pressure air from the gas turbine engine reduces its efficiency and thereby increases its fuel consumption.

It is therefore desirable to provide an improved air pressurisation system. Air pressurisation systems which make use of air which is taken from a lower pressure source of a gas turbine engine, such as a bypass duct, and which subsequently compress the air prior to delivering it to the cabin are also known. Some exemplary air pressurisation systems are described in EP3517436 B1, EP3517437 B1 and EP3517438 B1.

### SUMMARY

According to an aspect of the present disclosure, there is provided a rotary assembly for an aircraft, the rotary assembly comprising:
a rotor configured to be mechanically coupled to a spool of a gas turbine engine a flow modifier comprising a first section, defining a plurality of first flow channels configured to receive flow from the rotor, and a second section, defining a plurality of second flow channels configured to direct flow towards the rotor;
wherein the rotary assembly is configured to permit relative movement between the rotor and the flow modifier to move between:
   a turbine configuration in which the rotor is configured to receive air from an external air source via the second flow channels to drive the spool to rotate; and
   a compressor configuration in which the rotor is configured to be driven to rotate by the spool and to receive and compress air from the gas turbine engine, and discharge the compressed air for supply via the first flow channels to an airframe system,
   wherein the second flow channels are angled and/or shaped such that a flow, e.g., bulk flow, through at least part of the second flow channels is in a direction with a component in an axial direction of the rotor.

In other words, the second flow channels may extend in a direction with a component in an axial direction of the rotor along at least part of their lengths. The first flow channels may be angled and/or shaped such that a flow, e.g., bulk flow, through the first channels has a smaller component of velocity in the axial direction that the flow, e.g., bulk flow, through the second flow channels.

The second flow channels may be angled and/or shaped such that an inlet direction to the second flow channels is substantially aligned with an axial direction of the rotor. Additionally or alternatively, the second flow channels may be angled and/or shaped such that an inlet direction to the second flow channels comprises components in axial and radial direction of the rotor. Additionally or alternatively again, the second flow channels may be angled and/or shaped such that flow, e.g., bulk flow, through the second flow channels is in a direction with a greater component in an axial direction of the rotor than flow though the first flow channels. Additionally or alternatively again, the second flow channels may be angled and/or shaped such that flow, e.g., bulk flow, through the second flow channels is in a direction with components in axial and radial direction of the rotor. The second flow channels may be configured to turn a flow of air passing through the second flow channels towards a radial direction of the rotor.

The rotary assembly may further comprise a flow director configured to receive flow from the rotor via the first flow channels via a first opening and deliver the flow to the airframe system in the compressor configuration. The rotary assembly, e.g., the flow modifier, may be configured to at least partially close the first opening in the turbine configuration. The flow director may be configured to deliver a flow to the second flow channels via a second opening in the turbine configuration. The rotary assembly may be configured to at least partially close the second opening in the compressor configuration.

The rotary assembly may further comprise an actuator arrangement configured to cause relative movement between the rotor and the flow modifier to move the flow modifier between the compressor configuration and the turbine configuration. The actuator arrangement may be configured to: cause relative movement between the rotor and the first section so that the first flow channels are aligned with the rotor for operation in the compressor configuration. The actuator arrangement may be configured to: cause relative movement between the rotor and the second section so that the second flow channels are aligned with the rotor for operation in the turbine configuration.

Additionally or alternatively, the actuator arrangement may configured to: cause relative movement between the flow director and the flow modifier so that the first opening of the flow divertor is aligned with the first section in the compressor configuration. The actuator arrangement may be further configured to: cause relative movement between the flow director and the flow modifier so that the first opening is at least partially blocked by the flow modifier in the turbine configuration.

The second section may be configured such that a flow distance through the second flow channels is greater than a flow distance through the first channels.

The second section may be configured to act together with the rotor to expand air received at the second section in the turbine configuration. The first section may be configured to act together with the rotor to compress air received at the rotor in the compressor configuration.

A gas turbine engine assembly may comprise a gas turbine engine having a spool; and the above-mentioned rotary assembly, wherein the rotor is mechanically coupled to the spool.

An aircraft may comprise an airframe, and the above-mentioned gas turbine engine assembly.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein. In particular, features described in relation to the air/oil separator of the first mentioned air pressurisation system may apply equally to any other air/oil separators mentioned herein.

### BRIEF DESCRIPTION OF THE DRAWINGS

Embodiments will now be described by way of example only with reference to the accompanying drawings, which are purely schematic and not to scale, and in which:
FIG. 1 is a sectional side view of a gas turbine engine;
FIG. 2 is a close-up sectional side view of an upstream portion of a gas turbine engine;
FIG. 3 is a partially cut-away view of a gearbox for a gas turbine engine;
FIG. 4 is a schematic view of a rotary assembly, according to arrangements of the present disclosure, for supplying air to an airframe system;
FIG. 5A shows a front view of an example rotary assembly in a compressor configuration;
FIG. 5B shows a front view of an example rotary assembly in a turbine configuration;
FIG. 6A shows a cross-sectional view of a rotary assembly, according to arrangements of the present disclosure, in the compressor configuration;
FIG. 6B shows a cross-sectional view of a rotary assembly, according to arrangements of the present disclosure, in the turbine configuration;
FIG. 7A shows a cross-sectional view of another rotary assembly according to the present disclosure, in the compressor configuration;
FIG. 7B shows a cross-sectional view of another rotary assembly according to the present disclosure, in the turbine configuration; and
FIG. 8 is a schematic diagram of an aircraft including an airframe, a gas turbine engine and a rotary assembly.

### DETAILED DESCRIPTION

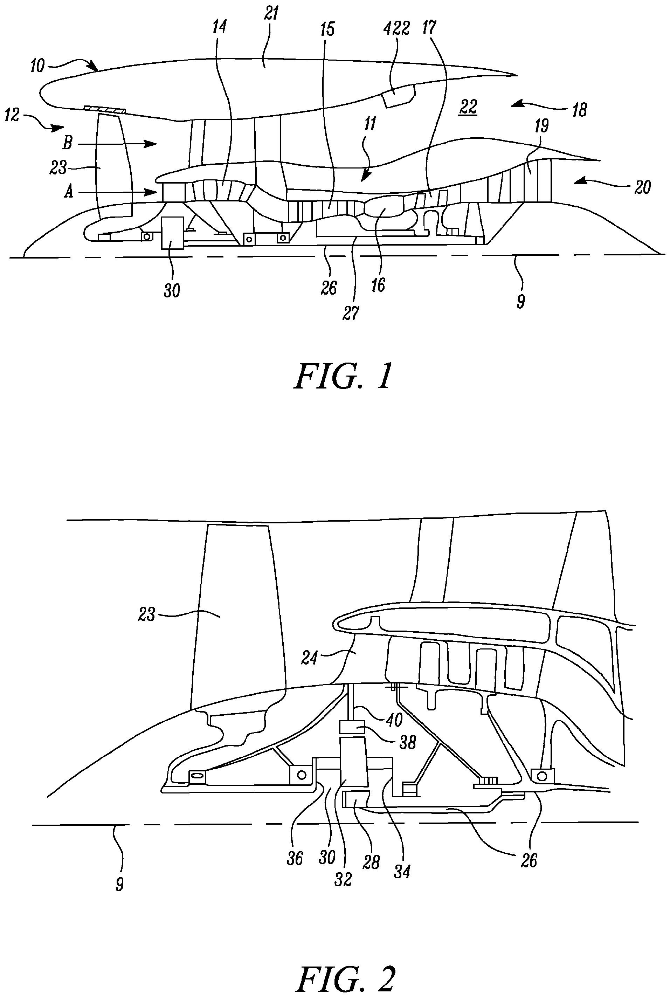

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The bypass duct 22 may comprise an engine bypass duct port 422 for supplying air from the bypass duct to an air pressurisation system or the like. The engine core 11 may also comprise an engine core port for supplying air from a compressor stage of the engine core 11 (such as the low-pressure compressor 14 or the high-pressure compressor 15) to an air pressurisation system or the like. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in FIG. 2. The low-pressure turbine 19 (see FIG. 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

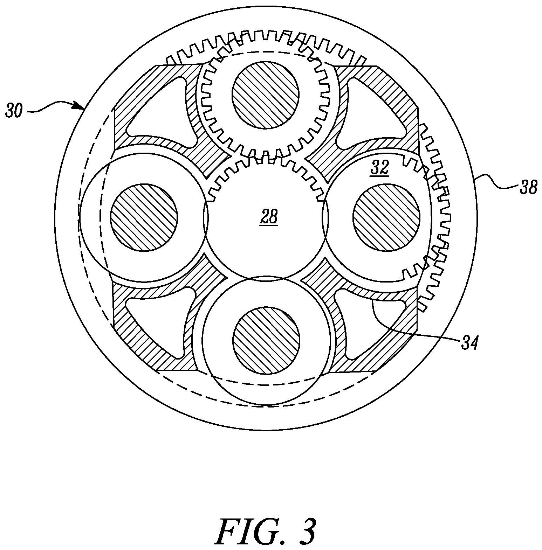

The epicyclic gearbox 30 is shown by way of example in greater detail in FIG. 3. Each of the sun gear 28, planet gears 32 and ring gear 38 comprise teeth about their periphery to intermesh with the other gears. However, for clarity only exemplary portions of the teeth are illustrated in FIG. 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in FIGS. 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in FIGS. 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the FIG. 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of FIG. 2. For example, where the gearbox 30 has a star arrangement (described above), the skilled person would readily understand that the arrangement of output and support linkages and bearing locations would typically be different to that shown by way of example in FIG. 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial and circumferential directions are mutually perpendicular.

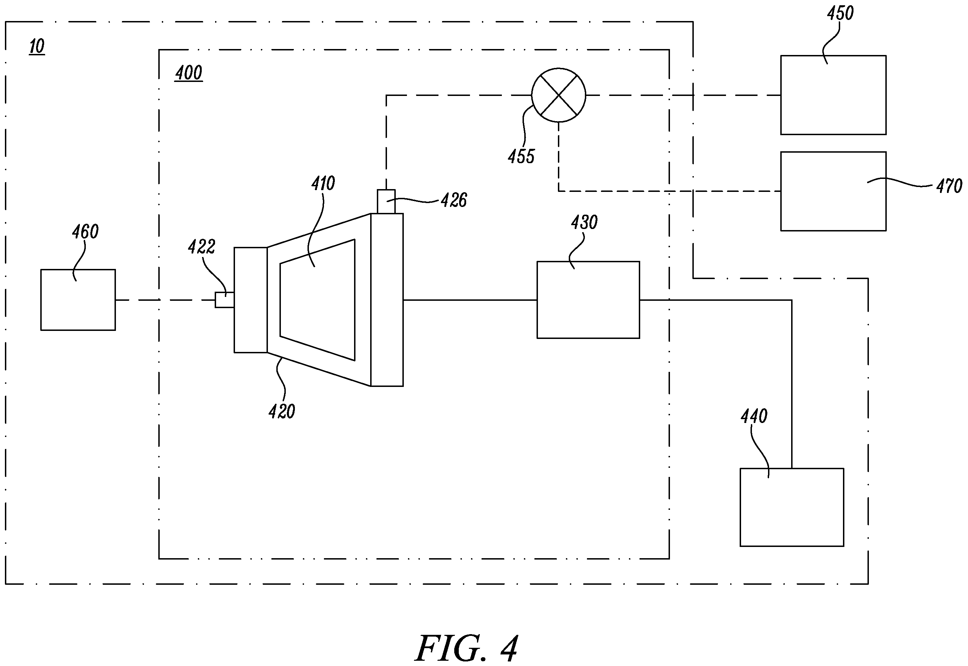

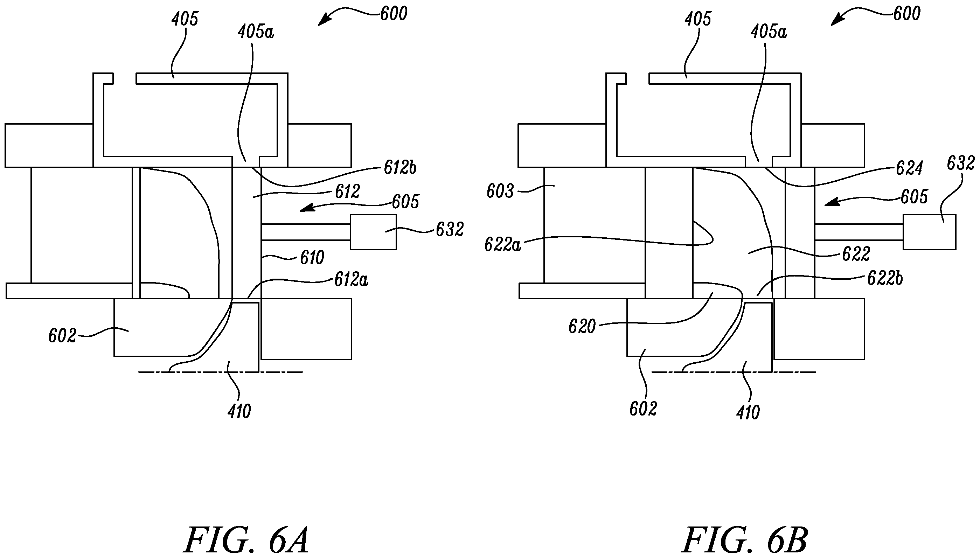

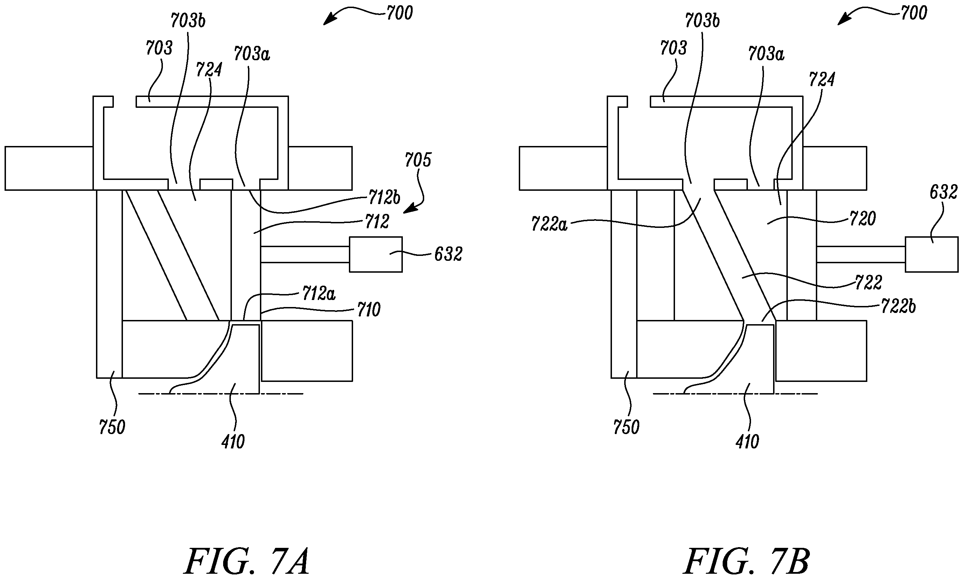

A diagram of an example rotary assembly 400 is shown schematically in FIG. 4. The rotary assembly 400 is adapted to provide air to an airframe system 450 and may be referred to as a blower assembly 400 or a cabin blower assembly 400. The rotary assembly 400 comprises a rotor 410 which is configured to be mechanically coupled to a spool 440 of a gas turbine engine. The spool may, for example, be the high-pressure (HP) spool of a two- or three- shaft gas turbine or an intermediate pressure (IP) spool of a three-spool engine, though any one or more spools of a gas turbine engine may be coupled to the rotor. The rotor 410 is disposed within a rotor housing 420. In the example of FIG. 4, the rotary assembly 400 comprises a variable transmission 430 for mechanically coupling the rotor 410 to the spool 440. The rotary assembly 400 is configurable between a compressor configuration and a turbine configuration. In particular, the rotary assembly 400 is configurable between the configurations by relative movement between the rotor 410 and a flow modifier (described below with reference to FIGS. 6 and 7). The rotary assembly 400 is therefore selectively operable in the compressor configuration and the turbine configuration.

The rotor 410 is configured to be driven to rotate by the spool 440 in the compressor configuration, whereby the rotary assembly 400 compresses air it receives from the gas turbine engine. The compressed air is discharged to an airframe discharge port 426 for supply to the airframe system 450 for an airframe pressurisation purpose. The airframe pressurisation purpose may be, for example, wing anti-icing, fuel tank inerting, cargo bay smoke eradication and/or aircraft cabin pressurisation. In the arrangement shown in FIG. 4, the rotor 410 is configured to receive air from the gas turbine engine via an engine bleed nozzle 422. The engine bleed nozzle 422 is in fluid communication with an air pathway (shown schematically at 460) of the gas turbine engine. Accordingly, in the compressor configuration, the rotary assembly 400 is configured to draw air from the air pathway 460 of the gas turbine engine and supply air to the airframe system 450, for example to pressurise and/or ventilate an aircraft cabin.

The rotary assembly 400 is configured to function as a compressor in the compressor configuration, such that air supplied to the airframe system 450 is at a higher pressure than air drawn from the air pathway 460 of the gas turbine engine. As a result, the rotary assembly 400 is not required to draw air from a relatively high-pressure region of the gas turbine engine in order to supply pressurised air to the airframe system 450. Instead, the rotary assembly 400 may draw air via the engine bleed nozzle 422 from a relatively low-pressure region of the gas turbine engine, such as from a bypass duct 22 of the gas turbine engine as shown in FIG. 1. If the rotary assembly 400 were alternatively required to draw air from a relatively high-pressure region of the gas turbine engine (e.g., the high-pressure compressor), an efficiency of the gas turbine engine may be reduced. Therefore, the rotary assembly 400 provides a more efficient airframe system pressurisation and ventilation system when incorporated into an aircraft. In addition, this approach reduces a scope for contamination of the air supply to the airframe system 450.

The rotor 410 is driven to rotate in the compressor configuration by the variable transmission 430, which itself receives drive input from the spool 440, for example through an accessory gearbox of the gas turbine engine. The speed of rotation of the spool 440 depends on the operating point of the gas turbine engine, which dictates a speed of the spool 440. The variable transmission 430 allows a rotational speed of the rotor 410 in the compressor configuration to be decoupled from a rotational speed of the spool 440, so that a compression performance of the rotary assembly 400 in the compressor configuration is not solely governed by the operating point of the gas turbine engine (e.g., it can be controlled to operate at a target speed independent of the rotational speed of the spool, and/or at a variable speed ratio relative to the rotational speed of the spool). Inclusion of a variable transmission 430 within the rotary assembly 400 therefore provides more versatile and adaptable means for supplying pressurised air to an airframe system. Various suitable variable transmission types will be apparent to those of ordinary skill in the art. For example, the variable transmission 430 may comprise an electric variator, as described in EP 3517436 B1.

The rotary assembly 400 is also configured to be able to receive compressed air from an external air source 470 to drive the spool 440 to rotate for cranking the gas turbine engine in the turbine configuration. In particular, the rotary assembly 400 may be configured to receive compressed air from an external air source 470 to drive the spool 440 to rotate for starting the gas turbine engine in the turbine configuration. In the example of FIG. 4, the rotary assembly is configured to receive compressed air from the external air source 470 via the airframe discharge port 426. In addition, the rotary assembly 400 further comprises an isolation valve 455 which is configured to isolate the airframe discharge port 426 from the external air source 470 in the compressor configuration, and to isolate the airframe discharge port 426 from the airframe system 450 in the turbine configuration. However, it will be appreciated that the rotary assembly 400 may otherwise be configured to receive compressed air from the external air source 470, such as via an external air port, for example.

The external air source 470 may be derived from, for example, an auxiliary power unit (APU) of the aircraft, ground starting equipment (GSE) or from another gas turbine engine of the aircraft (which may be referred to as a cross-bled source). In the example of FIG. 4, the rotary assembly 400 is configured to discharge air to the engine bleed nozzle 422 in the turbine configuration. However, the rotary assembly 400 may otherwise discharge air in the turbine configuration, such as to a dedicated auxiliary nozzle, for example. Air discharged from the rotary assembly 400 via a dedicated auxiliary nozzle may be used for cooling other systems and/or components of the gas turbine engine and/or the aircraft in the turbine configuration.

The rotary assembly 400 is configured to function as a turbine in the turbine configuration, such that the spool 440 may be driven to rotate by the rotor 410. Generally, the rotary assembly 400 can drive rotation of the spool 440 to a rotational speed which is sufficient to enable the gas turbine engine to successfully execute an ignition process (which may be referred to as a "light-up" speed). Consequently, the rotary assembly 400 dispenses with a need to provide a dedicated air turbine starting system or an electric starting system to the gas turbine engine, each of which are associated with additional weight and system complexity.

The use of a two-configuration rotary assembly 400 allows for an assembly in which the rotor 410 rotates in the same rotation direction (i.e., clockwise or anticlockwise) in both the compressor configuration and the turbine configuration. In this way, in the turbine configuration of the rotary assembly 400 the rotor 410 will drive the spool 440 to rotate in the same direction that the spool 440 rotates when it drives the rotor 410 in the compressor configuration. The direction in which the rotor 410 rotates in both the compressor configuration and the turbine configuration is referred to as the primary (or desired) rotation direction herein. The opposite direction to the primary or desired rotation direction is referred to as the secondary (or non-desired) rotation direction. This allows for the omission of a separate reversing mechanism to permit the spool 440 to be driven to rotate in its starting direction, which will be the same as the direction it rotates during when driving the rotor 410 in the compressor configuration. A separate reversing mechanism would result in additional mechanical efficiency losses in, and increased weight of and/or a reduced reliability of, the rotary assembly 400.

FIG. 4 also schematically shows a gas turbine engine 10 comprising the first example rotary assembly 400. The gas turbine engine 10 may be in accordance with the gas turbine engine 10 described above with respect to FIG. 1 and/or FIG. 2.

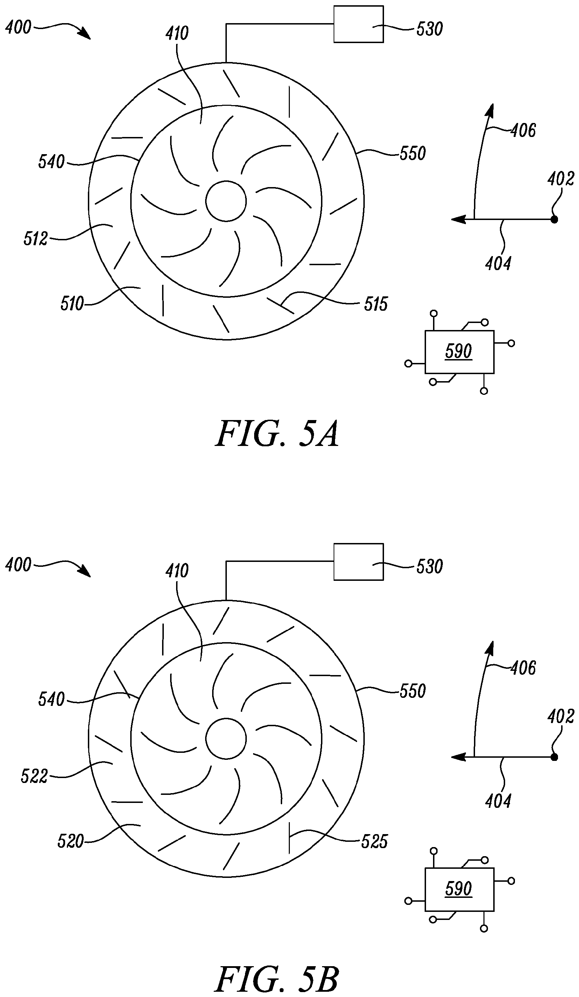

Various examples of a rotary assembly in accordance with the rotary assembly 400 described above with respect to FIG. 4 will now be described with reference to FIGS. 5A-7B, with like reference numerals being used to indicate common features.

FIGS. 5A-5B show a front or axial view (with respect to a rotation axis of the rotor) of an example rotary assembly 400 in a compressor configuration and in a turbine configuration, respectively. The rotary assembly 400 comprises a rotor 410 configured to be mechanically coupled to a spool of a gas turbine engine. The rotary assembly 400 may be referred to according to a cylindrical co-ordinate system having an axial direction 402, a radial direction 404 and a circumferential direction 406. The axial direction 402 is defined as being coaxial with a rotational axis of the rotor 410 while the circumferential direction 406 corresponds to a direction of rotation of the rotor 410 in use. The radial direction 404 is mutually locally perpendicular to both the axial direction 402 and the circumferential direction 406.

In the example of FIGS. 5A-5B, a flow modifier 505 of the rotary assembly 400 comprises a diffuser vane array 510 comprising a plurality of diffuser vanes 515, and a nozzle guide vane array 520 comprising a plurality of nozzle guide vanes 525. The diffuser vanes 515 defines a plurality of first flow channels 512 for air to flow through from the rotor 410 towards the airframe discharge port 426. The nozzle guide vanes 525 define a plurality of second flow channels 522 for air to flow from the external air source 470 towards the rotor 410, e.g., when operating in the turbine configuration.

In the compressor configuration, as shown in FIG. 5A, the diffuser vane array 510 is disposed around the rotor 410 and is configured to act together with the rotor 410 to compress air received at the rotor 410 by converting kinetic energy of air received from the rotor 410 into pressure energy. Conversely, in the turbine configuration, as shown in FIG. 5B, the nozzle guide vane array 520 is disposed around the rotor 410 and is configured to act together with the rotor 410 to expand air received at the nozzle guide vane array 520 by converting pressure energy of air received at the nozzle guide vane array 520 into kinetic energy and to guide the air at an optimised approach angle into the rotor 410.

A geometry of each of the plurality of diffuser vanes 515 of the array may be selected so as to optimise an aerodynamic performance of the diffuser vane array 510 without compromising an aerodynamic performance of the nozzle guide vane array 520. Likewise, a geometry of each of the plurality of nozzle guide vanes 525 may be selected so as to optimise an aerodynamic performance of the nozzle guide vane array 520 without compromising an aerodynamic performance (i.e., a turbine performance) of the nozzle guide vane array 520. Accordingly, an overall performance of the rotary assembly 400 in both the compressor configuration and the turbine configuration may be improved by providing dedicated flow modifiers for the respective modes of operation, rather than, for example, attempting to provide a single configuration through which the flow merely passes in different directions.

The geometries of each of the plurality of diffuser vanes 515 and of each of the plurality of nozzle guide vanes 525 is predetermined and fixed in use. It may be that angles of attack of each of the plurality of diffuser vanes 515 and of each of the plurality of nozzle guide vanes is predetermined and fixed in use. By providing a fixed configuration of the respective aerodynamic components, dynamic sealing losses associated with variable geometry and/or rotatable vanes may be eliminated or reduced, and the overall performance of the rotary assembly 400 may be improved in the compressor configuration and/or the turbine configuration relative to alternative rotary assemblies having such features. The example rotary assembly 400 further comprises an actuator arrangement 530 configured to cause relative movement between the rotor 410 and the diffuser vane array 510 along the axial direction 402 so that the diffuser vane array 510 is disposed around the rotor 410 for operating in the compressor configuration. Similarly, the actuator arrangement 530 is also configured to cause relative movement between the rotor 410 and the nozzle guide vane array 520 so that the nozzle guide vane array 520 is disposed around the rotor 410 for operating in the turbine configuration.

In some arrangements, the actuator arrangement 530 may be configured to adjust an effective axial height of the diffuser vanes 515 by varying an open area of an inlet interface 540 between the rotor 410 and the diffuser vane array 510, and/or by varying an open area of an outlet interface 550 at a radially outer side of the diffuser vane array 510, wherein the effective axial height of the diffuser vanes 515 is defined with respect to a rotational axis of the rotor 410. In some examples, the actuator arrangement 530 may be configured to adjust an effective axial height of the diffuser vanes 515 by varying a cross-sectional area of the diffuser vane array 510 at a location between the inlet interface 540 and the outlet interface 550. Accordingly, in the compressor configuration, a compression performance of the rotary assembly 400 may be adjusted to meet a compression demand associated with, for example, an airframe system.

The rotary assembly 400 may be provided with (e.g., comprise) a controller 590 which is configured to control the actuator arrangement 530. For this purpose, the controller 590 may be configured to be in data communication (e.g., for transmitting control signals) with the actuator arrangement 530 by means of a wired or wireless connection. The controller 590 may be internal to (e.g., included within) the rotary assembly 400. However, this disclosure also envisages that the controller 590 may be external to the rotary assembly 400. If so, the controller 590 may, for example, form a part of an external control system such as an avionics system of a gas turbine engine or an aircraft in which the rotary assembly 400 is incorporated. The controller 590 is generally configured to control the actuator arrangement 530 to cause relative movement between the rotor 410 and the flow modifier 505 and thereby move the rotary assembly 400 between being operable in the compressor configuration and being operable in the turbine configuration.

In the arrangement shown in FIGS. 5A and 5B, the diffuser vane array 510 is configured to discharge the flow from the rotor to a flow director 405 (illustrated in FIGS. 6A and 6B), e.g., via the first flow channels 512, when the rotary assembly 400 is operating in the compressor configuration, and the nozzle guide vane array 520 is configured to receive flow from the flow director 405, e.g., to the second flow channels 522, when the rotary assembly 400 is operating in the turbine configuration. The nozzle guide vane may receive the flow from the flow director via a same opening to which the flow from the rotor is discharged in the compressor configuration. The geometry of the flow director 405 may be configured to minimise pressure losses in the flow when the rotary assembly 400 is operating in the compressor configuration. For example, the flow director 405 may comprise an outlet volute. Accordingly, the geometry of the flow director 405 may be such that, when the rotary assembly 400 is operating in the turbine configuration, the inlet flow to the nozzle guide vane array 520, e.g., to the second flow channels 522, has a high magnitude of swirl, e.g., velocity in a circumferential direction 406 of the rotor. This high swirl velocity may necessitate the nozzle guide vanes 525 being configured, e.g., shaped, to redirect the flow through a high angle, e.g., such as an angle of greater than 90 degrees, greater than 120 degrees or approximately 180 degrees, e.g., in the circumferential direction, before reaching the rotor 410.

Further, in the arrangements depicted in FIGS. 5A and 5B, the first and second flow channels 512, 522 may be configured for the flow, e.g., the bulk flow, to pass through the flow channels in directions with radial and/or circumferential components. However, the flow, e.g., the bulk flow, passing though the first and second flow channels 512, 522 may have zero velocity, e.g., substantially zero velocity, in the axial direction of the rotor.

With reference to FIGS. 6A, 6B, 7A and 7B rotary assemblies 600, 700 according to arrangements of the present disclosure will now be described. The rotary assemblies 600, 700 may be advantageous compared to the rotary assembly depicted in FIGS. 5A and 5B, in that the rotary assemblies 600, 700 may be configured to reduce a turning angle and/or rate of turning of the flow through the second flow channels 622, 722 when the rotary assemblies are in the turbine configuration.

FIGS. 6A and 6B depict cross-sectional views of rotary assembly 600 in the compressor configuration and the turbine configuration respectively. The rotary assembly 600 comprises the rotor 410, a housing 602 for the rotor, which is similar to the housing 420, and a flow modifier 605. The flow modifier 605 may comprise a diffuser vane array 610, which may be similar to the diffuser vane array 510. The flow modifier 605 further comprises a nozzle guide vane array 620. The diffuser vane array 610 and the nozzle guide vane array 620 may be coupled, e.g., rigidly connected, together to form the flow modifier 605.

The rotary assembly comprises a mode actuator 632 (i.e., an actuator to move the blower assembly between the respective configurations for the respective different modes). The mode actuator 632 is configured to cause relative movement between the rotor 410 and the flow modifier 605, e.g., in the axial direction, for moving the rotary assembly 600 between the compressor configuration and the turbine configuration. In the turbine configuration, the nozzle guide vane array 620 is positioned with respect to the rotor 410 so as to allow air to flow through the nozzle guide vane array 620, e.g., through second flow channels 622, and to the rotor 410 in a direction having a radially inward component (e.g., a compound circumferential and radial direction). In the compressor configuration, the diffuser vane array is positioned with respect to the rotor 410 so as to allow air to flow from the rotor 410 and through the diffuser vane array 610, e.g., through the first flow channels 612, in a direction having a radially outward component. In this particular arrangement, the flow modifier 605 is configured to translate along an axial direction while the rotor 410 maintains a static axial position, such that the combined vane array assembly 690 may be referred to as a translating vane array assembly.

It will be appreciated that in other arrangements, the diffuser vane array 610 and the nozzle guide vane array 620 may not be rigidly connected or may be otherwise connected, with one or more additional actuators being provided in the rotary assembly 600 for causing relative movement between the rotor 410 and each vane array for operation in each configuration.

At least one dynamic seal may be provided in the rotary assembly 600 proximal to and/or around the diffuser vane array 610 and/or the nozzle guide vane array 620 to minimise pressure losses associated with air leakages between the rotor 410 or the diffuser vane array 610 and an external environment in the compressor configuration and/or air leakages between the rotor 410 or the nozzle guide vane array 620 and the external environment in the turbine configuration.

The nozzle guide vane array 620 differs from the nozzle guide vane array 520 in that the nozzle guide vanes 625 of the nozzle guide vane array 620 are configured, e.g., shaped, such that a flow direction, e.g., bulk flow direction, through the second flow channels 622 has a component in the axial direction of the rotor. For example, the nozzle guide vane array 620 may be configured, e.g., shaped, such that flow passes through inlets 622a to the second flow channels 622 in a direction with a component in the axial direction. In the arrangement shown in FIGS. 6A and 6B, the nozzle guide vanes 625 are configured, e.g., shaped, such that flow passes through inlets 622a to the second flow channels 622 in an axial direction, or a direction with substantially no component in the radial direction. In some arrangements, the flow passing through the inlets to the second flow channels 622 may have a component in the circumferential direction 406.

The nozzle guide vanes 625 may be configured, e.g., shaped such that the flow through the second flow channels 622 is turned, as the flow passes through the second flow channels 622, towards the radial direction, e.g., from the substantially axial direction at the inlets 622a. As illustrated, when the flow leaves the second flow channels 622, e.g., at the outlets 622b of the second flow channels, the flow may be in a substantially radial direction, and may include a component in the circumferential direction. In other words, a bulk flow direction through the outlets 622b may be in a substantially radial direction and may include a component in the circumferential direction. A component of bulk flow velocity at the outlets 622b in the axial direction may be zero, e.g., substantially zero.

The rotary assembly 600 further comprises the flow director 405. As described above, the flow director 405 may be configured to minimise pressure losses in the flow when the rotary assembly 600 is operating in the compressor configuration. For example, the flow director 405 may comprise an outlet volute. As illustrated in FIG. 6A, when the rotary assembly is operating in the compressor configuration, the flow modifier 605 may be arranged such that the diffuser vane array 610 is aligned with the rotor 410, e.g., flow passage of the rotor, and a first opening 405a into the flow director 405. In particular, the diffuser vane array may be positioned such that inlets 612a to the first flow channels are aligned with the rotor 410, e.g., flow passage of the rotor, and outlets 612b of the first flow channels are aligned with the first opening 405a into the flow director 405.

As depicted in FIG. 6B, when the rotary assembly 600 is operating in the turbine configuration, the nozzle guide vane array 620 may be aligned with the rotor 410. For example, the outlets 622b of the second flow channels 622 may be aligned with the rotor 410, e.g., flow passages formed by the rotor 410. When the flow modifier 605 is positioned such that the nozzle guide vane array 620 is aligned with the rotor 410, the first opening 405a into the flow director may be blocked, e.g., closed or covered, by the flow modifier 605. For example, the nozzle guide vane array 620 may comprise a blocking part 624, which may be arranged to block the first opening 405a in the turbine configuration. Hence, in the turbine configuration, there may be substantially no flow through the first opening 405a of the flow director.

The housing 602 may comprise an axial duct part 603. The axial duct part 603 may be aligned with the nozzle guide vane array 620, e.g., the inlets 622a to the second flow channels defined by the nozzle guide vane array, in fluidic communication with the inlets 622a. The axial duct part 603 is also in fluidic communication with the external air source 470 via one or more ducts and, optionally, the isolation valve 455 or another valve. When the rotary assembly 600 is operating in the turbine configuration, air from the external air source 470 may be supplied to the nozzle guide vane array, e.g., the second flow channels, through the axial duct part 603 of the housing, e.g., rather than via the flow director 405. In this way, the flow may be supplied to the nozzle guide vane array in a substantially axial direction of the rotor, e.g., having substantially no radial and/or circumferential component. In other arrangements, flow may be supplied to the inlets of the second flow channels in a direction having a component in the radial direction. The component of velocity in the radial direction may be less than a component of velocity in the axial direction. Additionally or alternatively, the flow may flow through the inlets of the second flow channels in a direction having a component in the circumferential direction.

When the rotary assembly 600 is operating in the turbine configuration, the flow from the external air source 470 may be turned from the substantially axial direction to a direction having components in the radial and circumferential direction by the nozzle guide vane array 620. The flow may be turned through an angle of less than 180 degrees, less than 120 degrees, approximately 90 degrees or less than 90 degrees between the axial direction and the radial direction, in the circumferential direction or in a combination of the two. An angle through which the flow is turned by the nozzle guide vane array 620 may therefore be less than an angle through which flow is turned by the nozzle guide vane array 520 described above, e.g., in the circumferential direction or in total. Additionally or alternatively, the nozzle guide vane array 620 may be configured, e.g., shaped, such that a rate of turning of the flow, e.g., between the axial and radial directions and/or in the circumferential direction, along the lengths of the second flow channels 622 (relative to the flow through the flow channels) may be less than a rate of turning of the flow along the lengths of the second flow channels 522.

FIGS. 7A and 7B depict a cross-sectional view of rotary assembly 700 in the compressor configuration and the turbine configuration respectively. The rotary assembly 700 may be similar to the rotary assembly 600 and features described in relation to the rotary assembly 600 may apply equally to the rotary assembly 700, and vice versa. The rotary assembly 700 comprises the rotor 410, a housing 750 for the rotor, which is similar to the housing 420, and a flow modifier 705. The flow modifier 705 may comprise a diffuser vane array 710, which may be similar to the diffuser vane array 510, 610. The flow modifier 705 further comprises a nozzle guide vane array 720.

The nozzle guide vane array 720 differs from the nozzle guide vane array 520 in that the nozzle guide vanes 725 of the nozzle guide vane array 720 are configured, e.g., shaped, such that a flow direction, e.g., of the bulk flow, through the second flow channels 722 has a component in the axial direction of the rotor. For example, the nozzle guide vane array 720 may be configured, e.g., shaped, such that flow passes through inlets 722a to the second flow channels 722 in a direction with a component in the axial direction.

In the arrangement shown in FIGS. 7A and 7B, the nozzle guide vanes 725 are configured, e.g., shaped, such that the second flow channels 722 extend in a direction with components in the axial and radial directions from their inlets 722a to their outlets 722b. In other words, flow, e.g., a bulk flow, through the second flow channels 722 may be in a direction with components in the axial and radial direction between the inlets 722a and outlets 722b. Additionally, a flow direction, e.g., of the bulk flow, through the second flow channels 722 may have a component in the circumferential direction.

As mentioned above, the diffuser vane array 710 may be configured for flow to pass through the first flow channels in a direction with substantially no axial component. In other words, the first flow channels may extend in a flow direction with components in radial and circumferential directions only. Accordingly, the nozzle guide vane array 720 may be angled relative to the diffuser vane array 710 in an axial plane of the rotor. As the second flow channels 722 extend in a flow direction with an axial component, in addition to radial and optionally circumferential components, lengths of the second flow channels 722 (relative to the flow through the flow channels) may be greater than lengths of the first flow channels 712 and may be greater than the lengths of the second flow channels 522 in the arrangements depicted in FIGS. 5A and 5B.

The rotary assembly 700 further comprises a flow director 703. The flow director may be similar to the flow director 405 and may be configured to minimise pressure losses in the flow when the rotary assembly 700 is operating in the compressor configuration. For example, the flow director 703 may comprise an outlet volute. The flow director 703 may comprise a first opening 703a, which may be configured to align with the diffuser vane array 710 when the rotary assembly is in the compressor configuration. In particular, the first opening 703a may be aligned, and in fluidic communication with, outlets 712a of the first flow channels when the rotary assembly is in the compressor configuration. The flow director 703 may further comprise a second opening 703b. The second opening 703b may be configured to align with the nozzle guide vane array 720 when the rotary assembly is in the turbine configuration. In particular, the second opening 703b may be aligned, and in fluidic communication with, inlets 722a to the second flow channels when the rotary assembly is in the turbine configuration.

The second opening 703b may be spaced apart from the first opening 703a, e.g., in an axial direction. In some arrangements, the second opening 703b may be formed at a position on the flow director 703 at which a velocity of the flow within the flow director has a smaller component in the circumferential direction than at the first opening 703a. As illustrated in FIG. 7A, when the rotary assembly 700 is operating in the compressor configuration, the second opening 703b may be blocked, e.g., closed or covered, by the flow modifier, e.g., such that there is substantially no flow through the second opening. For example, the flow modifier may comprise a blocking part 724, which may form part of the nozzle guide vane array, which blocks the second opening 703b when the rotary assembly in in the compressor configuration. As illustrated in FIG. 7B, when the rotary assembly 700 is operating in the turbine configuration, the first opening 703a may be blocked, e.g., closed or covered, by the flow modifier, e.g., such that there is substantially no flow through the first opening 703a. As depicted, when the rotary assembly 700 is operating in the turbine configuration, the blocking part 724 may be aligned with the first opening 703a, to block the first opening. The rotary assembly 700 may comprise one or more seals configured to minimise pressure losses associated with air leakages between the flow director 703 and the blocking part 724 at the first and second openings 703a, 703b when the rotary assembly is in the turbine and compressor configurations respectively.

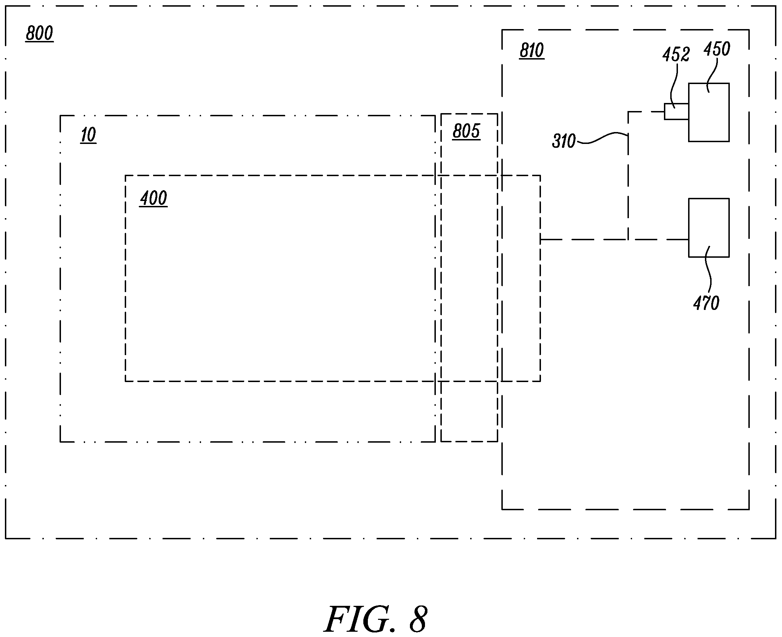

FIG. 8 shows a schematic view of an aircraft 800 which includes an airframe 810, a gas turbine engine 10, a pylon 805 and the rotary assembly 400. The pylon 805 is configured to attach the gas turbine engine 10 to the airframe 810 (e.g., to a wing of the airframe 810), as will be appreciated by those of ordinary skill in the art. The gas turbine engine 10 may be in accordance with the gas turbine engine 10 described above with reference to FIGS. 1 to 3. The rotary assembly 400 may have any suitable combination of the features described above with respect to the rotary assemblies 400, 600, 700. The rotary assembly 400 may be at least partially disposed within the gas turbine engine 10, at least partially disposed within the pylon 805 and/or at least partially disposed within the airframe 810. For instance, the rotor 410 and housing 420 may be disposed within the gas turbine engine 10. The airframe 810 comprises the airframe system 450, to which the airframe port 452 is configured to supply conditioned and compressed (i.e., pressurised) air from the rotary assembly 400 in the compressor configuration, and the external air source 470, which is configured to supply air to the rotary assembly 400 in the turbine configuration of the rotary assembly.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined by the appended claims.

## Claims

1. A rotary assembly (600, 700) of a pressurized air system for an aircraft (800), the rotary assembly comprising:
a rotor (410) configured to be mechanically coupled to a spool (440) of a gas turbine engine (10),
a flow modifier (605, 705) comprising a first section, defining a plurality of first flow channels (612, 712) configured to receive flow from the rotor, and a second section, defining a plurality of second flow channels (622, 722) configured to direct flow towards the rotor;
wherein the rotary assembly (600, 700) is configured to permit relative movement between the rotor (410) and the flow modifier (605, 705) to move between:
a turbine configuration in which the rotor (410) is configured to receive air from an external air source (470) via the second flow channels (622, 722) to drive the spool (440) to rotate; and
a compressor configuration in which the rotor (410) is configured to be driven to rotate by the spool (440) and to receive and compress air from the gas turbine engine (10), and discharge the compressed air for supply via the first flow channels (612, 712) to an airframe system (450),
wherein the second flow channels (622, 722) are angled and/or shaped such that a flow through at least part of the second flow channels (622, 722) is in a direction with a component in an axial direction (402) of the rotor.

2. The rotary assembly (600, 700) of claim 1, wherein the second flow channels (622, 722) are angled and/or shaped such that an inlet direction to the second flow channels is substantially aligned with an axial direction (402) of the rotor (410).

3. The rotary assembly (600, 700) of claim 1, wherein the second flow channels (622, 722) are angled and/or shaped such that an inlet direction to the second flow channels comprises components in axial and radial directions (402, 404) of the rotor (410).

4. The rotary assembly (600, 700) of any of the preceding claims, wherein the second flow channels (622, 722) are angled and/or shaped such that flow through the second flow channels is in a direction with a greater component in an axial direction (402) of the rotor (410) than flow though the first flow channels (512, 612, 712).

5. The rotary assembly (600, 700) of any of the preceding claims, wherein the second flow channels (622, 722) are angled and/or shaped such that flowthrough the second flow channels is in a direction with components in axial and radial directions (402, 404) of the rotor (410).

6. The rotary assembly (600, 700) of any of the preceding claims, wherein the second flow channels (622, 722) are configured to turn a flow of air passing through the second flow channels towards a radial direction (404) of the rotor (410).

7. The rotary assembly (600, 700) of any of the preceding claims, further comprising a flow director (405, 703) configured to receive flow from the rotor (410) via the first flow channels (612, 712) via a first opening (405a, 703a) and deliver the flow to the airframe system (450) in the compressor configuration, wherein the rotary assembly is configured to, at least partially, close the first opening in the turbine configuration.

8. The rotary assembly (600, 700) of claim 7, wherein the flow director (405, 703) is configured to deliver a flow to the second flow channels (622, 722) via a second opening (703b) in the turbine configuration, and optionally wherein the rotary assembly is configured to, at least partially, close the second opening (703b) in the compressor configuration.

9. The rotary assembly (600, 700) of any of the preceding claims, wherein the assembly further comprises an actuator arrangement (530) configured to cause relative movement between the rotor (410) and the flow modifier (605, 705) to move the flow modifier between the compressor configuration and the turbine configuration.

10. The rotary assembly (400, 600, 700) of claim 9, wherein the actuator arrangement (530) is configured to:
cause relative movement between the rotor (410) and the first section so that the first flow channels (612, 712) are aligned with the rotor (410) for operation in the compressor configuration; and
cause relative movement between the rotor (410) and the second section so that the second flow channels (622, 722) are aligned with the rotor (410) for operation in the turbine configuration.

11. The rotary assembly (600, 700) of claim 9 or 10 when depending on claim 7, wherein the actuator arrangement (530) is configured to:
cause relative movement between the flow director (405, 703) and the flow modifier (605, 705) so that the first opening (405a, 703a) of the flow divertor is aligned with the first section in the compressor configuration; and
cause relative movement between the flow director and the flow modifier so that the first opening is at least partially blocked by the flow modifier in the turbine configuration.

12. The rotary assembly (600, 700) of any of the preceding claims, wherein the second section is configured such that a flow distance through the second flow channels (622, 722) is greater than a flow distance through the first channels.

13. The rotary assembly (600, 700) of any of the preceding claims, wherein the second section is configured to act together with the rotor (410) to expand air received at the second section in the turbine configuration.

14. A gas turbine engine assembly, the assembly comprising:
a gas turbine engine (10) having a spool (440); and
the rotary assembly (600, 700) according to any of the preceding claims, wherein the rotor (410) is mechanically coupled to the spool (440).

15. An aircraft (800) comprising an airframe (810), and the gas turbine engine assembly of claim 14.
